# EUROPEAN PATENT APPLICATION

(11) **EP 1 248 250 A1**
(43) Date of publication of application: **09.10.2002**
(21) Application number: 01107782.3
(22) Date of filing: 04.04.2001
(51) Int. Cl.: G09G 5/28, G06F 3/14

(54) **Optimized data access for drawing operations**

(71) Applicant: SUN MICROSYSTEMS, INC., Palo Alto, California 94303 (US)
(72) Inventor: Duerr, Herbert, 22926 Ahrensburg (DE); Hosemann, Thomas, 22529 Hamburg (DE)
(74) Representative: HOFFMANN - EITLE

(57) **Abstract**

A method and system for improved drawing operations for drawing an object onto background image information already displayed on a client graphic unit. At a client unit an object sub-region of the object to be displayed is determined and based thereupon an object sub-region request is transmitted to a graphics server for retrieving background image information within the object sub-region. After receiving the background image information of the object sub-region the client unit superimposes object image information onto the background image information in order to provide an improved appearance of the object on a client graphic unit. The thus generated information of the object sub-region is for example displayed on a client display. The invention allows to avoid jaggy representations, particularly of small characters, in a client and server scenario.

## Description

### Field of the Invention

The invention relates to a method for drawing an object on a client graphic unit, the client graphic unit including a plurality of pixels with background image information. Further, the invention relates to a corresponding client unit and graphics server.

### Background of the Invention

In a growing number of fields, computerized applications aid users in obtaining various services in a private environment or in an office environment. Such applications can include text processing applications, image processing applications, spread sheet applications, personal data services, e-mail applications, home banking applications and similar.

With the availability of high quality displays for data processing units, ever more elaborate graphics and display contents become possible. A display screen visualized for a user on a display unit when executing for example one of the above listed applications, may be partitioned into a large number of individual fields, each field suitable for displaying various graphic elements, digits, signs, letters and similar.

For example in a text editing application or an Internet application it is often required to display text elements in a variety of different fonts on a display, and it should be possible to arbitrarily scale the various text elements. The same applies when displaying of any other object on a display, the representation of an object on a display should have high quality, irrespective of a size or position and similar of the object.

Typically, a display of a data processing unit is subdivided into a large number of pixels, each pixel generally representing a point, square or rectangle on the display with a defined size. Each pixel may individually be driven to display information, e.g., grayscale, color hue, saturation and similar. A large number of pixels, preferably viewed together from a certain distance, may then generate a visual representation of objects on the display, as well known in the art.

If it is assumed that a letter is to be displayed in black onto a white display, an individual pixel on the display will either be colored black or white, depending on the position of the letter. This may work well if the boundary of the letter or object lies exactly on the border line between two pixels, as in this case, the transition from black to white exactly represents the object boundary, leading to a clear display of the object. However, an exact representation of the object on the screen is not possible, if the object boundary does not lie on the border line between two pixels, for example if the border of the object obliquely cuts through a number of pixels. In this case the display driver may either decide to represent a pixel in black or in white, even as a part of the pixel should be displayed in white and the other part should be displayed black.

As a consequence, the object representation on the display does not correctly reflect the original object, i.e., the object boundaries may become jaggy or frayed. For example, if an oblique line, e.g. of the letter A is to be displayed on a screen, the oblique part of the A will appear on the display as having step-like boundaries, which may impair intelligibility of the displayed character.

Even though high resolution displays having a very large number of individual pixels are available, for example allowing a resolution of 1024 by 800 pixels, if very small objects are to be displayed, an object representation on the display may become distorted, if the object size or the size of a detail of an object becomes to lie within the range of the size of a pixel. Besides a resolution constraint of a display such as a CRT display or a TFT display or similar, a screen driver for driving a display may also impose a certain limitation on the number of pixels available for making up a display screen.

Thus, if for example a text document with very small fonts is to be displayed on a screen, the contours of the individual letters, or more generally, signs or objects, may become distorted, as the size of an individual letter may only account for a relatively small number of pixels.

In this case, in order to improve the appearance of the displayed object, pixels at the boundary of the object could be calculated according to some algorithm to include both object and background information, providing a smoother transition to a user's eye. However, this approach may only work well in a case, where the corresponding drawing application program resides on a single data processing device as a single entity or module. Only in this case the application program is responsible for drawing the object and providing the background for the object, i.e., a background color, image or similar, onto which the object is to be drawn.

However, in a growing number of fields, applications do not reside as a single module on a single data processing device, to the contrary, more and more applications are distributed applications, executed on a plurality of data processing devices. Even applications executed on a single data processing device are generally partitioned into a plurality of modules. In this case, a module responsible for performing a drawing operation for an object may not be aware of background information underneath the object, and providing a smooth transition between object and background is not possible. Moreover, in many applications those modules handling background information of a display screen are physically separate from modules providing for a drawing operation of objects. They may either be at different locations in a single data processing device, or, these modules may reside on different data processing devices, communicating via a data link, such as a computer network or similar.

### Summary of the Invention

It is therefore desirable to provide for improved drawing of an object onto a display independent from a computing environment, improving the appearance of an object representation on a screen.

According to a first example, a method for outputting an object to a client graphic unit, the client graphic unit including a plurality of pixels with background image information, includes: determining an object sub-region including at least one pixel intersected by an object boundary; obtaining from a graphics server background image information of the at least one pixel of the object sub-region; and superimposing object image information of the object to be drawn onto the background image information of the at least one pixel of the object sub-region, in order to generate a redrawn object sub-region for output:

Accordingly, the invention allows, before actually outputting an object to a client graphic unit, e.g., displaying an object on a client display, to retrieve background image information, e.g. from a storage location or graphics server, at another physical location, enabling a processing of at least the boundary pixels of the object to improve the appearance of the object at the client graphic unit.

The method may include determining an object region including pixels at least partially covered by the object: determining a clipping region for the object; and determining the object sub-region as an area shared by the clipping region and the object region. Therefore, the invention advantageously allows to reduce the size of a region with background image information to be retrieved from the graphics server in order to reduce bandwidth requirements.

The clipping region may be obtained based on one of the group consisting of: client graphic unit characteristics; and-user interaction. Thus, while the object region will generally represent an area covered by the object, this object region may be reduced by the clipping region, the clipping region being constituted by an actually displayable frame containing the object, e.g. an overall size of the display or a frame thereon, or determined by user interaction, such as scrolling operations of a screen, other objects covering a region of the screen and similar.

Further, the object sub-region may be defined as the smallest rectangle including pixels intersected by the object boundary. Accordingly, a size of an area with background image information to be retrieved from the graphics server may be further reduced, further limiting bandwidth requirements.

Moreover, the object sub-region may include at least one field only including pixels intersected by the object boundary. Accordingly, the object sub-region may advantageously only include those pixels with background image information, which are actually needed for drawing operations providing an improved object appearance on a screen. Accordingly, bandwidth requirements can be still further reduced. As the object sub-region may be a discontinuous collection of fields, transmission of not required pixels therebetween can be avoided.

It is possible that the object consists of a plurality of subobjects, allowing to treat a collection of subobjects such as letters, characters and similar, as a single object, reducing a computational complexity.

The object may be constituted by at least one of the group consisting of: - a letter; - a number; - a character; and - a geometrical shape.

The method may further include to cache redraw requests for redrawing background image information of a redraw region at the client. As in many cases during temporal variations of a display or graphical representation certain regions are redrawn, and correspondingly information to be represented in a redraw region is known at one point in time at the client, this information may be cached to facilitate computing boundary pixels of the object for an improved appearance of the object on the client graphic unit.

The cached redraw request may advantageously be discarded, if a more recent redraw request for the same redraw region is obtained, in order to update the redraw request as necessary.

The method may include to cache only redraw requests which request the redrawing of a redraw region using at least one of: - monochrome information; - grayscale gradient information; - color gradient information; and-algorithmical drawing rules. As in the above cases storage requirements may be small, as opposed to storing a background image such as a bitmap, such redraw requests may advantageously be stored at the client for use when drawing an object with improved appearance onto a client graphic unit.

The at least one cached redraw region may be subtracted from the object region to obtain the object sub-region. Thus, the size of the object sub-region may be further reduced by redraw regions already known at the client, in order to further reduce communication requirements.

Further, the method may include superimposing object image information onto the at least one pixel of the object sub-region to generate redrawn pixels of the object sub-region for display. Accordingly, particularly the boundary pixels of the object to be drawn onto the client graphic unit may be obtained by combining the background image and the object image information, thus allowing to generate pixels for drawing the object with improved appearance.

The superposition operation may be performed for remaining pixels intersected by the object boundary using the cached redraw request. Accordingly, the information on the redraw regions maintained at the client by caching the redraw requests may be used for performing the superposition operation for generating pixels of the object for improved representation of the object on the screen.

The superimposing operation may include drawing the object; and calculating at least one pixel parameter reflecting object image information and background image information of a pixel. Accordingly, the object may be drawn using any algorithm for providing an improved appearance of the object on the screen based on the object image information and background image information.

The method may further include generating an object sub-region request for obtaining from the graphics server background image information of the object sub-region; transmitting the object sub-region request to the graphics server; receiving the background image information of the at least one pixel of the object sub-region; and transmitting at least the modified pixels of the object sub-region to the graphics server for storage. Accordingly, a communication scheme may be provided for requesting background image information of the object sub-region from the graphics server and for storing modified pixels of the object sub-region, i.e., after drawing the object, at the graphics server.

Still further, the entire object sub-region including the redrawn pixels may be transmitted to a client graphic unit, for representing or visualizing the object.

According to another example, a method for outputting an object to a client graphic unit of a client unit, the client graphic unit having a plurality of pixels including background information may include: receiving an object sub-region request from the client, requesting background image information of an object sub-region, the object sub-region including at least one pixel intersected by the object boundary; retrieving the background image information of the at least one pixel of the object sub-region; and transmitting the background image information to the client, enabling the client to superimpose the object image information onto the background image information of the at least one pixel of the object sub-region to generate a redrawn object sub-region for output.

Accordingly, the method operations, e.g. at the graphics server, allow to facilitate the output of an object to a client graphic unit, e.g., a client display, with improved appearance, by providing required background image information of an object sub-region upon request by a client unit.

Further, the modified pixels of the object sub-region may be received at the graphics server for storage; and storage pixels corresponding to the modified pixels received from the client may be deleted. Accordingly, the graphics server always maintains an up-to-date representation of the client graphic unit, e.g., a client display, wherein each time an object is output to the client graphic unit, e.g., drawn onto the client display, the background image information at the graphics server is updated by image information including the old background image information and the object superimposed thereon.

According to another example, a program may have instructions adapted to carry out the preceding method operations.

Further, a computer readable medium, in which a program is embodied, may be provided to make a computer execute the above method operations.

Still further, according to another example, a computer program product may be provided, comprising the computer readable medium.

According to another example, a client unit for outputting an object to a client graphic unit, the client graphic unit including a plurality of pixels with background image information, may include: a determining module for determining an object sub-region including at least one pixel intersected by an object boundary; a client communication module for obtaining from a graphics server background image information of the at least one pixel of the object sub-region; and a drawing module for superimposing object image information of the object to be drawn onto the background image information of the at least one pixel of the object sub-region to generate a redrawn object sub-region for output.

According to another example, a graphics server for outputting an object to a client graphic unit of a client unit, the client graphic unit having a plurality of pixels including background image information, may include: a server communication module for receiving an object sub-region request from the client, requesting background image information of an object sub-region, the object sub-region including at least one pixel intersected by the object boundary; a retrieval module for retrieving the background image information of the at least one pixel of the object sub-region; and wherein the server communication module is adapted to transmit the background image information to the client unit, enabling the client unit to superimpose the object image information onto the background image information of the at least one pixel of the object sub-region, in order to generate redrawn pixels of the object sub-region for display.

Further advantageous embodiments of the invention are disclosed in further dependent claims.

### Brief Description of the Drawings

- Fig. 1: shows a system for outputting an object to a client graphic unit according to a first embodiment of the invention;
- Fig. 2: shows a flow diagram of operations according to a method for outputting an object to a client graphic unit according to another embodiment of the invention;
- Fig. 3: shows a flow diagram of a method for outputting an object to a client graphic unit according to another embodiment of the invention, particularly outlining operations at a graphics server;
- Fig. 4: shows operations according to the invention, particularly outlining operations for determining an object sub-region;
- Fig. 5: illustrates operations for outputting an object to a client graphic unit according to an embodiment of the invention, particularly illustrating an example of representing a character string;
- Fig. 6: shows method operations of another embodiment of the invention, outlining further operations for obtaining an object sub-region;
- Fig. 7: shows a representation according to another embodiment of the invention, particularly illustrating obtaining an object sub-region;
- Fig. 8: shows method operations according to another embodiment of the invention, particularly illustrating operations for obtaining pixels for output to the client graphic unit;
- Fig. 9: shows a graphical representation of another embodiment of the invention; and
- Fig. 10: shows a flow diagram of method operations at a graphic server and a client unit according to another embodiment of the invention, particularly illustrating communications between the graphic server and the client unit.

### Detailed Description of the Preferred Embodiments

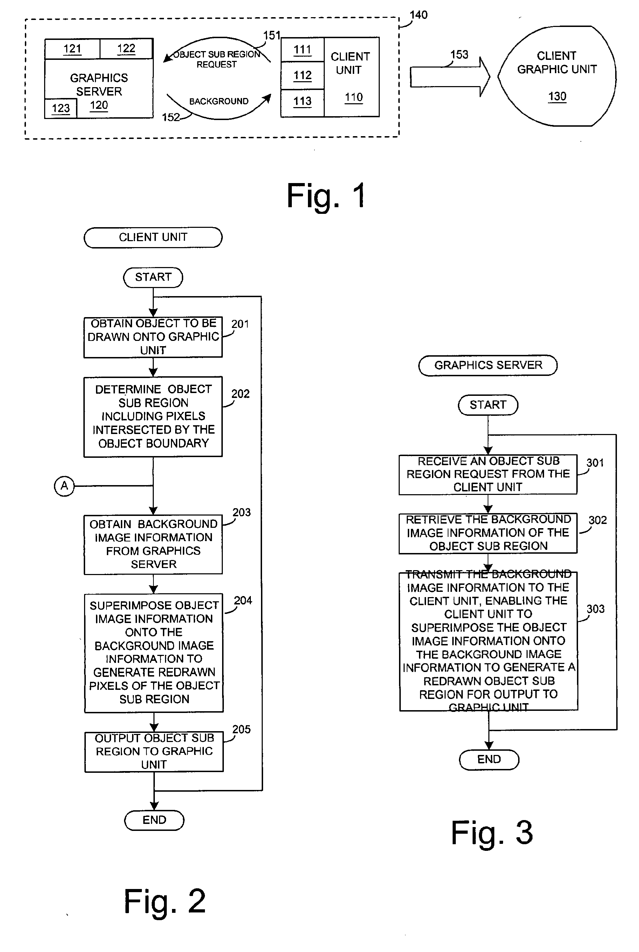

In the following a first embodiment of the invention will be described with respect to Fig. 1.

Fig. 1 shows a system for outputting an object to a client graphic unit according to an embodiment of the invention.

The system shown in Fig. 1 allows to draw an object with an improved appearance on a client graphic unit, e.g., a client display, particularly in a distributed environment, where, e.g., a drawing module and a module to display background information are maintained at separate locations, either within a single data processing device or on different data processing devices. According to the shown embodiment, background image information may be retrieved from a graphics server, and pixels covered by the object may be redrawn based on the background image information, for improving the appearance of the object, particularly at the object boundaries.

Fig. 1 illustrates a client unit 110 for outputting object to a client graphic unit 130 by using background image information retrieved from a graphics server 120, in order to provide an improved representation of the object at the client graphic unit 130, for example on the client display, e.g. as perceived by a user' eye viewing the client display.

The client unit 110 includes a determining module 111 for determining an object sub-region including at least one pixel intersected by an object boundary. Further, the client unit 110 includes a client communication unit 112 for obtaining from the graphics server 120 background image information of the at least one pixel of the object sub-region. Still further, the client unit 110 includes a drawing module 113 for superimposing object image information of the object to be drawn onto the background image information of the at least one pixel of the object sub-region, in order to generate a redrawn object sub-region for output to the client graphic unit 130.

The graphics server 120 is arranged for facilitating drawing the object on the client graphic unit 130, and includes a server communication module 121 for receiving an object sub-region request from the client unit, requesting background image information of an object sub-region, the object sub-region including the at least one pixel intersected by the object boundary. The background request is transmitted from the client unit 110 to the graphics server 120 as illustrated by an arrow 151.

Further, the graphics server 120 includes a retrieval module 122 for obtaining or retrieving the background image information of the at least one pixel of the object sub-region, e.g. from a data storage device associated with the client graphic unit.

The server communication module 121 is adapted to transmit the background image information to the client unit 110, enabling the client unit to superimpose the object image information onto the background image information of the at least one pixel of the object sub-region to generate the redrawn pixels of the object sub-region for output to the client graphic unit 130, e.g. display on the client display.

In order to communicate with the graphics server 120, the client communication module 111 may be adapted to generate an object sub-region request for obtaining from the graphics server background image information of the object sub-region; to transmit the object sub-region request to the graphics server; to receive the background image information of the at least one pixel of the object sub-region; and to transmit at least the modified pixels of the object sub-region to the graphics server for storage.

The background image information is transmitted from the graphics server 120 to the client unit 110, as illustrated by an arrow 152.

Accordingly, the graphics server 120 maintains a representation of the background image information of the client graphic unit 130, i.e., of a current display screen at the client graphic unit. The client unit 110 is responsible for actually outputting the object to the client graphic unit 130. The graphics server 120 and the client unit 110 advantageously cooperate in providing an improved appearance of an object to be output to the client graphic unit, as during the drawing operation executed by the drawing module 113 the background image information obtained from the graphics server may be used to calculate pixels containing both object information and background image information to generate redrawn pixels for display.

Actively retrieving the background image information from the graphics server is necessary, as the background image information is not known at a client unit responsible for drawing an object. Without background image information smoothing operations or similar to provide an improved appearance of the object on the display could not be performed.

For example, if a small object such as a small letter is to be output to the client graphic unit, e.g., displayed on the client display, instead of the previous jaggy representation of the letter, potentially impairing intelligibility, the invention allows to provide a smooth representation of the letter by retrieving and processing the underlying background information.

The graphics server 120 and the client unit 110 may be constituted by separate units arranged at different locations, and the object sub-region request, as illustrated by arrow 151, and the background information, as illustrated by arrow 152, may be communicated between the graphics server and the client unit through any communication link, such as a network or a dedicated communication line, including wireless transmissions.

However, it is also possible that the graphics server and the client unit are located within a single data processing device, as illustrated by the dashed line 140. In this case, the client unit 110 may be constituted by a module for providing the functionality of the client unit as outlined above, and the graphics server may be constituted by a module providing the functionality of the graphics server, as outlined above. In this case, the transmission of the background request from the client unit to the graphics server and the transmission of the background image information from the graphics server to the client unit may be effected through internal connections, such as a system bus.

In the following, examples of the elements shown in Fig. 1 will be outlined in further detail.

First, examples of the client unit 110 will be outlined in further detail.

The client unit 110 may be constituted by a general purpose data processing device, such as a home computer, a laptop computer, a mobile computing device, a personal data organizer, or a mobile telephone. The client unit may be realized as a hardware device with the above outlined functionality. However, it is also possible that the client unit is realized at least partially as a software module making a data processing device to realize the above outlined functionality.

Further, the determining module 111, the client communication module 112 and the drawing module 113 may be realized as functional units within the client unit 110, either as separate hardware elements, or software modules within the client unit, or combinations thereof.

Moreover, it is also possible that the determining module 111, the client communication module 112 and the drawing module 113 are at least partially constituted by separate physical entities, as for example separate hardware devices in communication with the client unit via any kind of communication link.

The determining module 111 and the drawing module 113 may also, for example, be constituted by software modules executed by a central processing unit of the client unit 110. Further, part of the functionality of the client communication module may be realized by a central processing unit of the client unit, whereas the actual transmitting and receiving functions of the client communication module may be realized by a transmitter and a receiver including terminals/ports for transmission, as required.

The client unit is further adapted to transmit information for output to the client graphic unit 130, as illustrated by an arrow 153. The client unit may be directly connected to the client graphic unit 130, e.g. a computer screen cable, a printer cable, or may be connected to the client graphic unit through any kind of communication link, including a communication network, a dedicated communication line or wireless communications, particularly if the client graphic unit is driven by a separate unit.

It is also possible that the client graphic unit 130 is integrated into the client unit, as for example in the case of a laptop computer, some mobile communication devices, such as personal data organizers, or in the case of mobile telephones or mobile communication units.

The client graphic unit 130 may generally be constituted by any output device, e.g. essentially be comprised of a display partitioned into a plurality of pixels, as well known in the art. Further, the client graphic unit may be a printer or any other output device. The client graphic unit may also be a virtual device for temporarily storing an output content, e.g. screen contents for later output onto a display screen or to a printer. The pixels may be represented by points, rectangles or squares of a predetermined size. Thus, a plurality of pixels can be used to represent grayscale, color information, saturation, hue and similar, of any kind of object. The number of pixels available determines the maximum resolution of a the client graphic unit, however, a resolution of the client graphic unit may also be determined by an application executed at the client unit and driving the client graphic unit, as also well known in the art.

A display unit of the client graphic unit 130 may be constituted by any kind of known display units, such as cathode ray tubes, TFT displays, projecting displays, printers, virtual devices, and similar.

The object sub-region determined by the client unit, enclosing the object or parts thereof, may generally have any shape. The object sub-region may be an area of the client graphic unit, i.e., a collection of pixels of the client graphic unit, which are determined to be at least partially covered by the object to be drawn to the client graphic unit.

The object sub-region may thus be a region including all pixels which are at least partially covered by the object, and may have the shape of the object itself, or may be constituted by any other shape including pixels at least partially covered by the object. For example, since a client graphic unit usually is constituted by rows and columns of pixels, an object region may advantageously be defined as a smaller rectangle including pixels at least partially covered by the object. In this case, the object sub-region may be defined by specifying only the corner pixels of the rectangle, thus providing a concise description of the object sub-region requiring only a small communication overhead. If the object region is more or less defined by the shape of the object, considerable information, e.g., coordinates of pixels may be needed to describe the object region.

However, it is noted that the object sub-region is not restricted to any particular shape, the object sub-region may have rectangular shape, the shape of the object, triangular shape, the shape of an octagon or similar.

If the object sub-region is a rectangle fitting the object, the object region may be chosen as the smallest rectangle fitting the object, or may be chosen as a region which is somewhat larger than the smallest rectangle fitting the object, e.g., if the object sub-region is defined to have a square shape or similar.

In the following, examples of the graphics server will be outlined in further detail.

The graphics server may be constituted by a general purpose data processing device, similar to the client unit. However, the graphics server may also be constituted by a data processing device with larger resources, e.g. for supporting a plurality of client units in displaying objects on client graphic units.

It is possible that the graphics server is constituted by a dedicated hardware device, however, it is also possible that the functionality of the graphics server is at least partially realized in software, executed on arbitrary data processing means.

Further, the server communication module 121 and the retrieval module 122 may be realized as functional blocks within the graphics server 120, at least partially realized in hardware or software. It also possible that the server communication module 121 and the retrieval module 122 are at least partially constituted by separate devices realizing the above outlined functionality, being located within the graphics server or being connected to the graphics server via any kind of communication link, including computer networks, dedicated communication links and wireless transmissions.

The graphics server 120 may include a memory area 123, for storing background image information of the client graphic unit 130. However, it is also possible that the graphics server is in communication with an external memory device for storing background image information. The graphics server may also be adapted to provide a plurality of memory partitions associated with a plurality of client graphic units connected to a plurality of client units, to server a plurality of users.

It is further possible that the graphics server is connected to an external storage unit storing background image information of one or a plurality of client graphic units. The communication between the graphics server and the external storage may be effected through a high-speed communication link, or any other communication link, as outlined above, including computer networks, dedicated communication lines and wireless transmissions.

Further to the above, it is also possible that the graphics server and the client unit and further elements of the system shown in Fig. 1, such the client communication module, the determining module and the drawing module of the client unit and the server communication module and retrieval module of the graphics server are realized within the data processing device 140, wherein the respective elements are individually or in groups realized by modules realizing the respective functionality.

In this case, the data processing unit 140 may be for example a main frame computer, connected to a plurality of users operating keyboards connected to the main frame computer, and each controlling operations through the keyboard and respective client graphic units.

In the following, as a practical example, it is assumed that a user instructs a drawing application to output a character string to a client graphic unit.

In the above example, the client unit 110 will first determine a region covered by the character string to be represented on the client graphic unit. Then, the client unit will generate a corresponding request for background image information concerning the determined area for displaying the character string and transmit same to the graphics server 120.

The graphics server 120 receives the background request and obtains corresponding background image information of the specified region. Then, the graphics server will transmit the retrieved background image information back to the client unit 110.

The client unit, upon receiving background image information will then perform the required drawing, smoothing operations or similar for the object using the background image information in order to enable an improved appearance of the object on the client graphic unit. For example, for obtaining a particular pixel on the client graphic unit intersected by an object boundary, the client unit may superimpose background image information and object information in order to obtain a smoother transition between the background image information and the actual object on the client graphic unit, thus avoiding jaggy boundaries of the object and allowing improved appearance of the object.

Particularly in case of small characters on a background image, the invention provides improved intelligibility of the characters, as abrupt transitions from the background image to the object can be avoided.

Advantageously, the client unit may transmit at least the modified pixels or the entire region previously obtained from the graphics server, after modification, back to the graphics server for storage. Thus the graphics server will always maintain an up to date version of the client graphic unit, i.e. of the background image information. In further drawing operations, then the newly stored background information may be retrieved from the graphics server for further drawing operations.

As the client unit does not request the entire background image information of the client graphic unit, but only a small region including the object, a bandwidth requirement for displaying the object can be reduced significantly, thus improving performance of the drawing operations, particularly in case the communication link between the client unit 110 and the graphics server 120 has limited bandwidth.

If the client graphic unit is not directly driven by the client unit, e.g., in case the client graphic unit is driven by a separate data processing device and connected to the client unit through a low bandwidth connection, only the region of the client graphic unit covered by the object may be transmitted to the client graphic unit as illustrated by arrow 153, thus allowing to reduce a bandwidth requirement also between the client unit and the client graphic unit.

The invention may be applied to the X Windows environment. X Window (X Window System) is a windowing system which runs under UNIX and all major operating systems. For example, it allows users to run applications on other computers in a network and view the output on their own screen. X Window generates a rudimentary window that can be enhanced with graphical user interfaces, such as Open Look. In the X environment, X client software is considered to reside in the computer that performs the processing and X server software is considered to reside in the computer that displays it. Both components can be in the same machine.

However, it is noted that the invention can be applied to any standard graphics environment.

It is noted that a computer-readable medium may be provided having a program embodied thereon, where the program is to make a computer or system of data processing devices execute functions or operations of the features and elements of the above described embodiments. A computer-readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer-readable medium.

In the following, a further embodiment of the invention will be described with respect to Fig. 2.

Fig. 2 outlines operations of a method for drawing an object at a client graphic unit, allowing an improved representation of the object at the client graphic unit, according to another embodiment of the invention. Fig. 2 particularly outlines operations carried out at a client unit, such as client unit 110 shown in Fig. 1.

The operations illustrated in Fig. 2 may be carried out using the system shown in Fig. 1, however, Fig. 2 is not limited thereto.

In a first operation 201 at the client unit an object to be output to the client graphic unit is obtained. This may include any sequence of operations receiving an object from another device, or internally generating an object to be displayed within the client unit. For example, if a letter is to be displayed on the client unit, the corresponding object, i.e. the shape of the letter, could be obtained by retrieving a corresponding font from a storage, scaling the font as appropriate, as instructed by a user or preset conditions, and similar. If an object such as a geometrical shape is to be drawn, obtaining the object could also include executing an algorithm for determining the shape of the object, as known in the art.

The object may be represented by a collection of boundary points and further information regarding color, interior and similar of the object, or the object may be represented by vectors for facilitating scalability. The objects may have any shape, color, saturation, as required and as supported by the corresponding client graphic unit.

An object may have any shape, such as a thin line, solid parts, patched parts, and similar. For example, an object may be constituted by at least one of the group consisting of:
- a letter;
- a number;
- a character; and
- a geometrical shape.

If a client graphic unit is a black and white display, a pixel will preferably be represented by grayscale information, while in the case of color displays, the pixel may additionally have information regarding color hue and saturation.

In a second operation 202 the client unit determines an object sub-region including at least one pixel intersected by the object boundary. As outlined above, it is particularly necessary to determine pixels of the client graphic unit, which are be intersected by object boundaries, as in this case background image information and object image information should be superimposed for an improved appearance of the object. Further, if the object is specified to be transparent, it may also be required to determine further pixels including object information and background information, i.e. the pixels covered by the interior of the object. Thus, if a transparent object is to be displayed onto a background image on the client graphic unit, all pixels at least partially covered by the object may be determined and the object sub-region obtained will preferably cover all such pixels.

In an operation 203 the client unit then obtains from a graphics server, such as graphics server 120 of Fig. 1, background image information of the at least one pixel. This may involve only the pixel intersected by the object boundary obtained in operation 202, or may involve the entire object sub-region, possibly including further pixels.

In an operation 204 the client unit then performs smoothing operations, i.e., superimposes the object image information of the object to be drawn onto the background image information of the at least one pixel of the object sub-region, in order to generate a redrawn object sub-region. The redrawn pixels will then reflect both background image information and object image information, for facilitating an improved appearance of the object, particularly the object boundary.

In an operation 205 the object sub-region is displayed on the client graphic unit, such as the client graphic unit 130. This may involve transmitting only modified pixels to the client graphic unit, particularly in case a separate data processing unit drives the client graphic unit, or may involve including the object sub-region or the modified pixels into a display screen used for driving the client graphic unit.

Thereafter the flow of operations ends, or, if further objects are to be output to the client graphic unit, the flow of operations may continue with operation 201 by obtaining a further object to be output to the client graphic unit.

The above outlined operations allow a client unit to retrieve background image information from a graphics server, in order to avoid a frayed representation of an object on the client graphic unit, as with the retrieved background image information, by superimposing background image information and object image information, a smoother appearance of the object to be drawn can be achieved on the client graphic unit.

In the following, a further embodiment of the invention will be described with respect to Fig. 3.

Fig. 3 particularly outlines operations carried out at a graphics server for outputting an object to a client graphic unit, according to another embodiment of the invention. The operations shown in Fig. 3 may be realized by the system shown in Fig. 1, however, Fig. 3 is not limited thereto.

In a first operation 301 the graphics server receives an object sub-region request from the client unit, requesting background image information of an object sub-region, the object sub-region including at least one pixel intersected by the object boundary, i.e. a pixel partially covered by the object. As outlined before with respect to Fig. 2, the object sub-region may also include further pixels fully covered by the object, for example, if the object is transparent or similar.

In an operation 302 the graphics server retrieves background image information of the at least one pixel of the object sub-region. The background image information may be stored in a storage unit forming an integral part of the graphics server, or being constituted by, e.g., an external database or data handler, providing a storage space associated with a client graphic unit, such as client graphic unit 130 shown in Fig. 1.

The retrieving operation may involve accessing the storage for background image information and retrieving the pixels specified by the object sub-region or may involve retrieving an entire background frame and then selecting the pixels specified in the object sub-region.

In an operation 303 the graphics server transmits the background image information to the client unit, for enabling the client unit to superimpose the object image information onto the background image information of the at least one pixel of the object sub-region, in order to generate a redrawn object sub-region for output, e.g. display.

As only the necessary background image information of the requested object sub-region is transmitted to the client unit, and not, e.g., an entire display screen content, bandwidth requirements can be limited.

Thus, the cooperation of the client unit, for example as outlined with respect to Fig. 2, and the graphics server, for example as outlined with respect to the present embodiment, may facilitate the provision of an improved appearance of an object to be drawn onto a screen, as background image information and object image information may be combined for providing smoother transition between the background and the object.

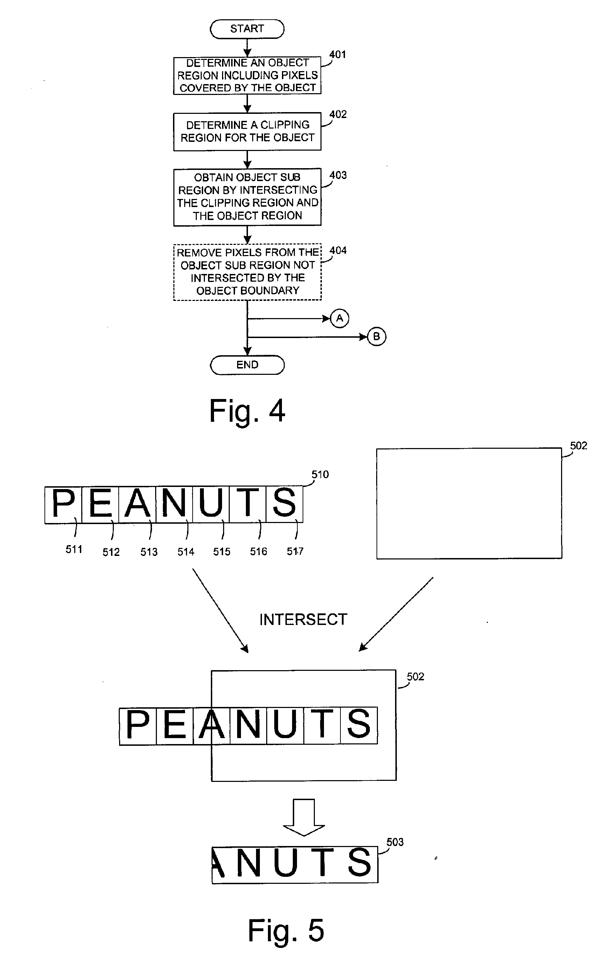

In the following, a further embodiment of the invention will be described with respect to Fig. 4.

Fig. 4 particularly outlines operations at the client unit for further reducing the size of the object sub-region to be requested from a graphics server, in order to further reduce the communication requirements between the client unit and a graphics server. The operations shown in Fig. 4 may be realized by the system of Fig. 1, however, Fig. 4 is not limited thereto.

In an operation 401 an object region including pixels of the object to be output to a client graphic unit is determined. The object region preferably is an area of the client graphic unit, i.e., a collection of pixels of the client graphic unit, which are determined to be at least partially covered by the object to be output to the client graphic unit.

The object region may thus be a region including all pixels which are at least partially covered by the object, and may have the shape of the object itself, or may be constituted by any other shape including pixels at least partially covered by the object. For example, since a client graphic unit usually is constituted by rows and columns of pixels, an object region may advantageously be defined as a smaller rectangle including pixels at least partially covered by the object. In this case, the object region may be defined by specifying only the corner pixels of the rectangle, thus providing a concise description of the object region requiring only a small communication overhead. If the object region is more or less defined by the shape of the object, considerable information, e.g., coordinates of pixels may be needed to describe the object region.

However, it is noted that the object region is not restricted to any particular shape, the object region may have rectangular shape, the shape of the object, triangular shape, the shape of an octagon or similar.

If the object region is a rectangle fitting the object, the object region may be chosen as the smallest rectangle fitting the object, or may be chosen as a region which is somewhat larger than the smallest rectangle fitting the object, e.g., if the object region is defined to have a square shape or similar.

As the object may include a plurality of sub-objects, such as a collection of characters or geometrical shapes, the object region can also be defined as a region covering the collection of sub-objects, equivalently to what was outlined above.

In an operation 402 a clipping region for the object is determined. A clipping region can be a region on the client graphic unit which is actually available for displaying the object, or the collection of sub-objects, and may be determined by the overall size of the client graphic unit or may be determined by a frame or window opened within the client graphic unit.

For example, a browser application for browsing information on computer networks such as the worldwide web on the Internet, will generally provide on the client graphic unit a concatenation of individual frames displaying information from individual sources. For example, a first frame on such a screen could display information of a text document retrieved, while a second frame on the client graphic unit could visualize a scroll bar, or further fields containing information, e.g., a table of contents, an advertisement or similar. As the individual frames on the client graphic unit have limited size, it is possible that not the entire object can be displayed within the respective frame, such that only a fraction of the object needs to be drawn and consequently only a fraction of background information needs to be retrieved from a graphics server.

Further, the clipping region can also be determined by a user, e.g., if the user specifies the size of a frame for displaying an object, or if the user moves part of the frame out of the client graphic unit, such that part of the frame disappears, e.g., through scrolling operations or drag & drop operations.

Accordingly, the clipping region can be based on client graphic unit characteristics, i.e., the size of frames on a client graphic unit, or on the overall size of the client graphic unit. For example, if the client graphic unit has very small dimensions, such as in the case of a mobile device such as a mobile telephone, it may be required to clip a large part of the object. Further, the clipping region can be based on user interaction, as outlined above, if a user determines the size of a display frame or moves part of the display frame or the object out of the visualized area of the client graphic unit.

In an operation 403 the object sub-region, i.e. the region which will be used for obtaining background image information from the graphics server, is obtained by intersecting the clipping region and the object region. Accordingly, the object sub-region is obtained as a region which includes the partition of the object which will actually be displayed on the client graphic unit, thus avoiding the retrieval of background image information from the graphics server for a partition of the object which will finally not be displayed on the client graphic unit.

The object sub-region determined by the client unit may generally have any shape determined by intersecting the object region and the clipping region, for example, may be a rectangle, a triangle, an octagon or parts of these shapes.

Optionally, as outlined in a operation 404 shown in a dashed box, pixels may be removed from the object sub-region which are not actually intersected by the object boundary or otherwise partially covered by the object. Thus, any pixels which will not have to be recomputed, when actually drawing the object onto the client graphic unit, may be removed from the object sub-region. Accordingly, it is also possible that the object sub-region is only a collection of pixels at least partially covered by the object to be drawn. It is noted that operation 404 is optional, the object region obtained in operation 403 may be maintained as it is.

Thereafter, the flow may continue with an entry point A shown in Fig. 1, i.e., the flow may continue with operation 203 shown in Fig. 2.

As according to the present embodiment the object sub-region is further optimized to include only those parts of the objects which will be actually needed for the redrawing operations, a communication load between the client unit and the graphics server may be reduced, as smaller amounts of data need to be transmitted.

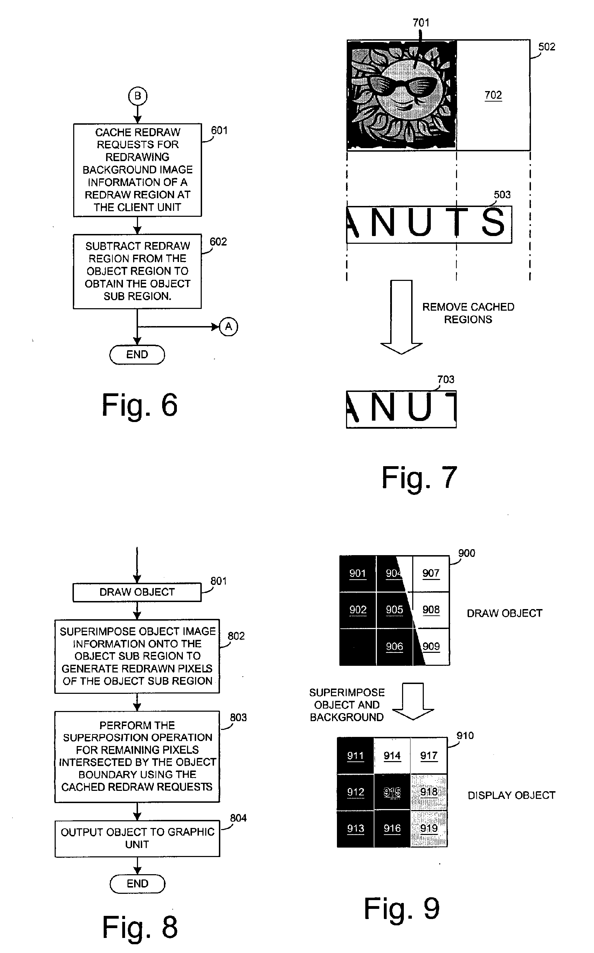

Following operation 404 the flow may also continue at an entry point B, as further outlined with respect to Fig. 6.

In the following, a further embodiment of the invention will be described with respect to Fig. 5.

Fig. 5 graphically outlines an example of obtaining an object sub-region according to another embodiment of the invention.

The operations graphically illustrated in Fig. 5 may be realized by the system of Fig. 1, however, Fig. 5 is not limited thereto.

In Fig. 5 an exemplary object to be output to a client graphic unit is illustrated. This object is assumed to be a string of characters forming the word "PEANUTS". The object region covering the object to be drawn in this example is illustrated at a reference numeral 510. The object region 510 includes a plurality of sub-objects formed by the individual letters of the character string "PEANUTS", denoted by reference numerals 511, 512, 513, 514, 515, 516 and 517.

In the shown example, the object region is constituted by the rectangle denoted 501 including the entire character string, however, this is an example only, any other object region could be chosen to include the character string "peanuts".

Further, a rectangle 502 in Fig. 5 illustrates a clipping region determined based on client graphic unit characteristics or user interaction, as for example outlined with respect to Fig. 4. The clipping region constitutes the region actually available for outputting the object to the client graphic unit.

As illustrated in Fig. 5, in order to obtain the object sub-region, the object region 510 and the clipping region 502 are intersected. The intersection operation may be accomplished by determining the actual position of the object region 510 within the clipping region 502 and superimposing the object region and the clipping region. The result of the intersection operation is shown at a reference numeral 503 and leaves the sub-objects 511, 512 and part of the subobject 513 clipped away, as this partition of the character string lies outside the clipping region 502.

Accordingly, the object sub-region determined by intersecting the object region 510 and the clipping region 502 includes the part of the character string to be displayed which lies inside the clipping region 502.

Accordingly, the size of the object sub-region can be reduced as compared to the object region, and only a reduced amount of background image information needs to be retrieved from a graphics server, thus reducing communication requirements.

Preferably, any pixel lying partially within the object sub-region, may be determined to belong to the object sub-region.

After obtaining the object sub-region 503, further processing may be performed as outlined with respect to previous embodiments.

In the following, a further embodiment of the invention will be described with respect to Fig. 6.

Fig. 6 particularly outlines operations for further reducing the size of the object sub-region, in order to further reduce communication requirements between a client unit and a graphics server. The operation of Fig. 6 may be performed by the system of Fig. 1, however, Fig. 6 is not limited thereto.

The flow of operation of the embodiment outlined with respect to Fig. 6 starts at an entry point B, corresponding to exit point B of Fig. 4, i.e., the flow of operations of Fig. 4 may be continued by the flow of operations of Fig. 6.

The embodiment of Fig. 6 allows to further reduce the size of the object sub-region, in addition to reducing the object sub-region by a clipping area as outlined with respect to Fig. 4.

In a first operation 601 redraw requests for redrawing background image information of a redraw region at the client are cached, e.g. in a memory unit of the client or a memory unit in communication with the client. A Redraw request effects that a certain area of a client graphic unit is 'overwritten' by newer information, such as an updated display frame, a new page to be displayed on the client graphic unit or similar. A redraw request may concern the entire screen or may relate to a fraction of the client graphic unit and may instruct the client unit to overwrite a certain portion of the client graphic unit by information included or associated with the redraw request.

For example, the redraw request could include information instructing the client unit to redraw a region of the client graphic unit in a particular color, for example with a changed background color, e.g., onto which information contained in character strings or similar is to be displayed for text editing. Accordingly, a redraw request may specify a redraw region of the display screen and specify a particular color to be displayed within the specified region.

Caching the redraw request may be effected by placing the redraw request into a buffer or any other temporary memory location, for example at the client unit or in a storage location in communication with the client unit, and allows to maintain information at the client unit regarding the redraw regions on the client graphic unit, e.g., a particular color of a particular region on the client graphic unit.

It may be preferred to always maintain an updated version of the cached redraw request, by discarding an old redraw request, if a more recent redraw request for the same region of the client graphic unit is received. If a redraw request for exactly the same region is newly received, the old redraw request can be entirely discarded. If only a sub-region of a region specified by a redraw request is covered by a newer redraw request, only parts of a redraw request can be discarded. This can be accomplished by rewriting an already cached redraw request to specify only a particular portion of the original redraw region of the already cached redraw request which is not covered by the more recent redraw request.

Redraw requests may suitably specify regions on the client graphic unit as rectangles, e.g., by specifying the coordinates of the rectangle, or may specify any other shapes on the client graphic unit.

In the example above, it was assumed that the redraw request specifies a certain color for a certain region of the client graphic unit, however, it is also possible, besides specifying monochrome information for a redraw region, to specify in a redraw request grayscale gradient information. This can, e.g., be accomplished by specifying a rule for generating a certain transition of grayscale levels within a redraw region on the client graphic unit. Further, the redraw request could specify a color gradient within a redraw region, in order to produce within the redraw region a certain transition between color hue and saturation or similar.

Further, the redraw request could specify any algorithmic drawing rule, for displaying information within a redraw region.

In the above examples the redraw request may specify information to be displayed within a redraw region without requiring large amounts of information, i.e., the redraw request can be short. The redraw request only has to specify the redraw region of the client graphic unit, e.g. coordinates, and to specify a rule for filling the redraw region, as outlined above. Thus, caching the redraw request as outlined above does not require large amounts of storage space and does not require larger resources, e.g., at the client unit.

Naturally, it is also conceivable to cache redraw requests containing for example bitmaps of a background image to be displayed within a redraw region, however, a bitmap may require considerable space and it may therefore not be useful to store redraw requests specifying background images such as bitmaps, i.e., to cache redraw requests occupying large amounts of storage space in the buffer or storage means at the client unit for caching the redraw request.

It is also conceivable that certain types of background images specified by redraw requests not covering excessive space, e.g., if the background image information can be appropriately compressed. In this case, a compressed version of the redraw request could be buffered, avoiding excessive storage requirements.

Furthermore, it is possible, if redraw requests specify only small client graphic unit redraw regions, to intermediately cache such requests, even if they contain image information such as bitmap information. In this case, it may require less resources to cache the redraw request, i.e., to cache a background image information, than to perform the operations for retrieving the background image information outlined with respect to the previous embodiments.

In an operation 602 illustrated in Fig. 6, the redraw region is subtracted from the object region to obtain the object sub-region. Thus, the size of the object sub-region may be further reduced by the individual redraw regions covering at least part of the object region, as for the parts of the object region covered by the redraw region the information contained within the redraw regions is already known at the client unit and does not need to be retrieved from the graphics server a second time. Subtracting the redraw region from the object region may be effected by comparing the coordinates of the respective regions and by identifying coordinates of a region on the client graphic unit covered by the object region but not by the redraw region.

Thus, according to the above operations, only parts of the client graphic unit remain within the object sub-region, which contain background image information which is not known at the client unit. As outlined before, displayed information within the redraw regions is already known at the client unit in accordance with the cached redraw requests.

After operation 602 the flow of operations may continue at an entry point A in Fig. 2, i.e., the flow of operations may continue with operation 203 of Fig. 2.

As outlined with the operations of Fig. 6, the size of the object sub-region can be further reduced, thus further reducing communication requirements between a client unit and a graphics server.

In the following a further embodiment of the invention will be outlined with respect to Fig. 7.

Fig. 7 illustrates an example for obtaining an object sub-region by subtracting cached redraw requests from an object region.

The operations illustrated in Fig. 7 may be performed by the system of Fig. 1, however, Fig. 7 is not limited thereto.

Fig. 7 shows the clipping region 502, outlined with respect to Fig. 5. However, instead of the clipping region 502, any other region on a client graphic unit could be illustrated instead.

The clipping region 502 includes an image region 701 displaying, e.g., a bitmap of an image to be displayed. Further, the clipping region 502 includes a redraw region 702, specified by a cached redraw request. The redraw region 702 is assumed to be colored in white, i.e., the redraw request specifies an interior of the redraw region 702 to contain white color.

Accordingly, the information displayed within the redraw region 702 is known at the client unit, while the region 701 containing the image information is not assumed to be known at the client unit, e.g., because caching a redraw request including bitmap information would require an excessive amount of storage space and thus should be avoided.

In Fig. 7, underneath the clipping region 502 the clipped object region 503 from Fig. 5 is illustrated. However, it is noted that any other object region could be illustrated instead.

As further illustrated in Fig. 7, the cached redraw region 702 is subsequently subtracted from the clipped object region 503, arriving at a further reduced object sub-region 703 including a still smaller sub fraction of the original character string "PEANUTS". The removal operation can be effected by re-specifying the coordinates defining the object sub-region to not include any region which is covered by a redraw region, such as redraw region 702.

Consequently, the object region 703 shown in Fig. 7 only covers that part of the original object region, which fits into the clipping region, and the background of which is not already known at the client unit due to a cached redraw request. Accordingly, only the background image information within the object sub-region 703 needs to be retrieved from the graphics server, thus further reducing communication requirements between the client unit and the graphics server. Further processing of the object information and the retrieved background image information may be performed as outlined with respect to previous embodiments.

In the following a further embodiment of the invention will be described with respect to Fig. 8.

Fig. 8 particularly outlines operations, e.g. carried out at the client unit for drawing the object onto the client graphic unit using the background information retrieved from a graphics server, such as graphics server 120 shown in Fig. 1.

In an operation 801 the object is drawn, e.g. by generating an internal representation of the object at the client unit. This may, for example, include scaling a vector representation of an object according to specified parameters, for example if a character or a character string is to be displayed in a certain size on the client graphic unit. Further, the drawing operation could include retrieving and combining partitions of an object to be drawn, e.g. could include retrieving sub objects from other locations in order to generate an internal representation of the object at the client unit. The drawing operation will preferably also include determining the object sub-region including those pixels on the client graphic unit which will at least be covered by the object.

Then, in an operation 802 the object image information is superimposed onto the object sub-region to generate redrawn pixels of the object sub-region.

The object image information is constituted by information obtained when drawing the object, e.g. a particular color, shade, saturation and similar of the interior of the object. The object sub-region includes the background image information retrieved from the graphics server, and therefore, for each given pixel within the object sub-region object image information and background image information is available, which may be appropriately superimposed to generate redrawn pixels of the object sub-region. The superposition operation may be performed as known in the art, e.g., by interpolating between the object image information and the background image information or by any other means. The superposition operation is preferably performed for all pixels within the object sub-region which are intersected by the object boundary, or more generally said, for all pixels which are not entirely covered by the object, e.g., if the object boundary intersects the respective pixel or if the object fully covers the pixel but is specified to be translucent, i.e., specified to let the background image information shine through the object.

In an operation 803 the superposition operation is then performed for remaining pixels intersected by the object boundary or otherwise covered by the object, using the cached redraw requests, i.e., using the client graphic unit information inside the particular redraw regions, as outlined with respect to previous embodiments. As also in this case the object information and the background information, i.e. the information of the cached redraw request, is known at the client, a similar superposition operation may be performed as outlined in operation 802.

Thereafter, in an operation 804 the object can be finally displayed on the client graphic unit. This may be achieved by displaying the entire object sub-region, the entire object region or the clipped object region, as required.

If the client unit and the client graphic unit are connected only through a low bandwidth connection, or, if a further device is responsible for actually displaying information on the client graphic unit, it may be advantageous to only transmit those pixels of the object sub-region which were actually redrawn in the superposition operation. Any pixels which are not at least partially covered by the object need not be transmitted to the client graphic unit in this case, as the information already displayed on the client graphic unit will not be changed.

Accordingly, by performing the above outlined superposition operations, the object to be displayed on the client graphic unit will have an improved appearance, as transitions between the objects and a background may be smoothed for providing a better visual impression for a viewer's eye.

After performing the superposition operation for redrawing pixels on the client graphic unit, the redrawn pixels constitute the new background image information on the client graphic unit and can therefore advantageously be transmitted back to the graphics server for storage. Thus, the graphics server will receive at least the modified pixels of the object sub-region for storage. It may be arranged for transmitting the entire object sub-region to the graphics server or transmitting only modified pixels, i.e. pixels within the object itself and pixels at the boundary of the object to the graphics server. The graphics server may then overwrite storage pixels corresponding to the modified pixels received from the client unit, in order to maintain an up-to-date version of the background image information displayed at the client unit.

In further operations for drawing an object, this new background information will now be retrieved upon request by the client unit, e.g., leading to the drawing of an object onto an object already output to the client graphic unit.

In the following, a further embodiment of the invention will be described with respect to Fig. 9.

Fig. 9 illustrates an example for drawing an object, e.g. in accordance with what was outlined with respect to Fig. 8.

In the upper part of Fig. 9 a small region 900 of an object to be drawn is illustrated, this region being covered partially by an object drawn with black ink. For example, the object could be a part of the letter "A" obliquely cutting through the region 900 on the client graphic unit. The region 900 is partitioned into fields or pixels 901 - 909, representing the pixels on the client graphic unit.

While pixels 901, 902 and 903, and 906 are assumed to be fully covered by the object to be drawn, pixels 904, 905, 908 and 909 are partially covered by the object, i.e., the boundary of the object intersects the respective pixels. Only pixel 907 is assumed to be not at all covered by the object to be drawn.

As the region 900 shows a case which can not actually be displayed, as a pixel may either be colored black or white, in the superposition operation of the object information and background information, pixels intersected by the object boundary will be redrawn to be solidly colored.

In the present example the background information is considered to be the white background, while it is noted that any other background, particularly a background image such as the image shown in region 701 of Fig. 7 may be present as background image information.

If the background image information is not available at the client unit, it could be decided to display within the pixels 904, 905, 908 and 909 either background information or object information. In this case, for example, pixels 904 and 905 could be colored black, as they are to a larger part covered by the object, while pixels 908 and 909 could be left as they are, i.e., containing background image information. In this case, instead of the oblique boundary of the object, a vertical boundary of the object would be obtained, potentially leading to impaired intelligibility of the underlying object, e.g. a letter "A".

In the superposition operation, enabled by the invention, as illustrated in the bottom part of Fig. 9, the pixels intersected by the object boundary have been redrawn to reflect both background information and object information. This can be achieved, as in the present example, by computing a mean gray level based on the amount of coverage of a respective pixel by the object and could lead to the gray level distribution of the area denoted 910, or by any other operation, e.g. smoothing operation.

While pixels 911, 912 and 913 fully covered by the object will be colored black, and pixel 917 not covered by the object will remain containing the background information, i.e., white, the partially covered pixels 914, 915, 918 and 919 will be recomputed based on the background information and the object information as outlined with respect to previous embodiments. This could, for example, lead to the particular gray levels of the pixels 914, 915, 918 and 919 depending on the amount of coverage of the individual pixels by the object.

The gray level distribution of the pixels of the region 910 actually displayed on the client graphic unit will lead to an improved appearance of the object to be drawn, particularly if viewed from some distance, as the transition between black and white will more naturally follow the object boundary.

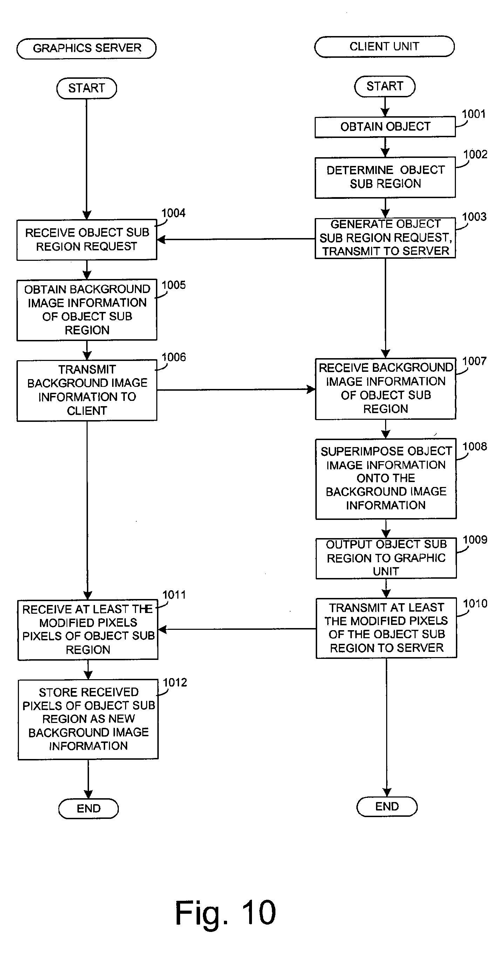

In the following a further embodiment of the invention will be described with respect to Fig. 10.

Fig. 10 particularly outlines operations carried out at a graphics server and a client unit, such as the graphics server 120 and the client unit 110 shown in Fig. 1. However, Fig. 10 is not limited thereto. Fig. 10 also shows communication operations between the graphics server and the client unit.

In a first operation 1001 an object to be output to the client graphic unit is obtained at the client unit. This operation may be similar to the embodiment outlined with respect to Fig. 8.

In an operation 1002 an object sub-region is determined, as for example outlined with respect to previous embodiments. Determining the object sub-region may include determining the smallest rectangle including pixels intersected by an object boundary of the object to be output to the client graphic unit, or, the object sub-region may include at least one field only including pixels intersected by the object boundary. Thus, the object sub-region may have any shape or may constitute any collection of pixels at least partially covered by the object. The object sub-region may be further reduced in size by subtracting a clipping region and by subtracting redraw regions corresponding to cached redraw requests, as outlined before.

In an operation 1003 an object sub-region request is generated and transmitted to the graphics server. The object sub-region request preferably specifies the object sub-region, as only the background image information of the pixels of the object sub-region is required.

If the object sub-region is constituted by a rectangle, the sub-region could be specified by including into the request coordinates of the corner pixels of the rectangle. However, it is also possible that the object sub-region request specifies a plurality of fields or even a plurality of individual pixels to be retrieved from the graphics server.

In general, a communication load between the client unit and the graphics server should be balanced by considering the amount of information needed for specifying the object sub-region in comparison to the information corresponding to the pixels included in the object sub-region.

In an operation 1004 the graphics server receives the object sub-region request. If the graphics server and the client unit are located within a single device, this may be accomplished through a system bus or any other communication between processes or application modules running at the processing device. If the graphics server and the client unit are located on physically separate computing devices, the transmission of the object sub-region request may be accomplished through any kind of communication link such as a network, a dedicated communication link, including wireless communications.

In an operation 1005 the graphics server obtains the background image information of the object sub-region. This may be accomplished as outlined with respect to previous embodiments, e.g., the graphics server may access a local storage or an external storage and retrieve information of the pixels of the object sub-region.

In an operation 1006 the graphics server transmits the background image information in a response to the client unit through any kind of communication link, as outlined above.

In an operation 1007 the background image information is received at the client unit and in an operation 1008 the object image information can be superimposed onto the background image information as outlined before.

In an operation 1009 the object sub-region is displayed on the client graphic unit, as outlined before.

In order to update the background image information of the client graphic unit maintained at the graphics server, as outlined already with respect to Fig. 8, in an operation 1010 the client unit may transmit at least the modified pixels of the object sub-region back to the server for storage. This transmission may again be accomplished through any kind of communication link as outlined above.

In an operation 1011 the graphics server receives at least the modified pixels of the object sub-region, and, in an operation 1012 the graphics server stores the received pixels of the object sub-region as new background image information, e.g., replacing old background image information, such as the background image information previously retrieved in accordance with the object sub-region request received in operation 1004.

As the graphics server always receives the updated version of the client graphic unit, the image information stored at the graphics server will always reflect the current display of information on the client graphic unit.

It is noted that a computer-readable medium may be provided having a program embodied thereon, where the program is to make a computer or system of data processing devices execute functions or operations of the features and elements of the above described embodiments. A computer-readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer-readable medium.

Further, while in the above flow diagrams operations are shown in a specific sequence, it is noted that this sequence of operations may be varied within reason. For example, displaying the object sub-region as shown in operation 1009 of Fig. 10 could be performed at another point in time, for example after operation 1010.

In the following, further embodiments of the invention will be described.

A client unit according to another embodiment of the invention may have the following elements.
1). Client unit for outputting an object to a client graphic unit, the client graphic unit including a plurality of pixels with background image information, including:
   a code section containing instructions to determine an object sub-region including at least one pixel intersected by an object boundary;
   a code section containing instructions to obtain from a graphics server background image information of the at least one pixel of the object sub-region; and
   a code section containing instructions to superimpose object image information of the object to be drawn onto the background image information of the at least one pixel of the object sub-region, in order to generate a redrawn object sub-region for output.
2). Client unit of 1), including a code section containing instructions to determine an object region including pixels at least partially covered by the object; to determine a clipping region for the object based on client graphic unit characteristics; and to determine the object sub-region as an area shared by the clipping region and the object region.
3). Client unit of 1), including a code section containing instructions to determine the clipping region is based on one of the group consisting of:
   - client graphic unit characteristics; and
   - user interaction.
4). Client unit of 1), including a code section containing instructions to determine the object sub-region is the smallest rectangle including pixels intersected by the object boundary.
5). Client unit of 1), including a code section containing instructions to determine the object sub-region to include at least one field only including pixels intersected by the object boundary.
6). Client unit of 1), including
   a code section containing instructions to cache redraw requests for redrawing background image information of a display region at the client; and
   a code section containing instructions to discard a cached redraw request, if a more recent redraw request for the same display region is obtained.
7). Client unit of 6), including a code section containing instructions to only cache redraw requests for redrawing of a display region using at least one of:
   - monochrome information;
   - grayscale gradient information;
   - color gradient information; and
   - algorithmical drawing rules.
8). Client unit of 6) or 7), including a code section containing instructions to subtract at least one cached display region from the object region to obtain the object sub-region.
9). Client unit of 1), including a code section containing instructions to superimpose object image information onto the at least one pixel of the object sub-region to generate redrawn pixels of the object sub-region for display.
10). Client unit of 1), including a code section containing instructions to perform the superposition operation for remaining pixels intersected by the object boundary using the cached redraw requests.
11). Client unit of 1), including a code section containing instructions
   to draw the object; and
   to calculate at least one pixel parameter reflecting object image information and background image information of a pixel.
12). Client unit of 1), including
   a code section containing instructions to generate an object sub-region request for obtaining from the graphics server background image information of the object sub-region;
   a code section containing instructions to transmit the object sub-region request to the graphics server;
   a code section containing instructions to receive the background image information of the at least one pixel of the object sub-region; and
   a code section containing instructions to transmit at least the modified pixels of the object sub-region to the graphics server for storage.
13). Client unit of 1), including a code section containing instructions to transmit the object sub-region including the redrawn pixels to a display device.
   Further, a graphics server according to another embodiment of the invention may have the following elements.
14). Graphics server for outputting an object to a client graphic unit of a client unit, the client graphic unit having a plurality of pixels including background image information, including:
   a code section containing instructions to receive an object sub-region request from the client unit, requesting background image information of an object sub-region, the object sub-region including at least one pixel intersected by the object boundary;
   a code section containing instructions to retrieve the background image information of the at least one pixel of the object sub-region; and
   a code section containing instructions to transmit the background image information to the client unit, enabling the client unit to superimpose the object image information onto the background image information of the at least one pixel of the object sub-region to generate redrawn pixels of the object sub-region for display.
15). Graphics server of 14), including
   a code section containing instructions to receive at least the modified pixels of the object sub-region to the graphics server for storage; and
   a code section containing instructions to delete from a storage pixels corresponding to the modified pixels received from the client unit.
16). Graphics server of 14), wherein the object sub-region is constituted by an area shared by an object region including pixels of the object and a clipping region for the object based on client graphic unit characteristics.
17). Graphics server of 14), wherein the object sub-region is the smallest rectangle including pixels intersected by the object boundary.
18). Graphics server of 14), wherein the object sub-region includes at least one field only including pixels intersected by the object boundary.
19). Graphics server of 14), wherein the object sub-region is obtained by subtracting at least one display region from the object region, a display region including background image information known at the client unit.

## Claims

1. Method for outputting an object to a client graphic unit, the client graphic unit including a plurality of pixels with background image information, including:
determining an object sub-region including at least one pixel intersected by an object boundary;
obtaining from a graphics server background image information of the at least one pixel of the object sub-region; and
superimposing object image information of the object to be drawn onto the background image information of the at least one pixel of the object sub-region, in order to generate a redrawn object sub-region for output.

2. Method of claim 1, including
determining an object region including pixels at least partially covered by the object;
determining a clipping region for the object; and
determining the object sub-region as an area shared by the clipping region and the object region.

3. Method of at least one of the claims 1 and 2, wherein the clipping region is based on one of the group consisting of:
- client graphic unit characteristics; and
- user interaction.

4. Method of at least one of the claims 1 - 3, wherein the object sub-region is the smallest rectangle including pixels intersected by the object boundary.

5. Method of at least one of the claims 1 - 4, wherein the object sub-region includes at least one field only including pixels intersected by the object boundary.

6. Method of at least one of the claims 1 - 5, wherein the object consists of a plurality of sub objects.

7. Method of at least one of the claims 1 - 6, wherein the object is constituted by at least one of the group consisting of:
- a letter;
- a number;
- a character; and
- a geometrical shape.

8. Method of at least one of the claims 1 - 7, including
caching redraw requests for redrawing background image information of a display region at the client unit; and
discarding a cached redraw request, if a more recent redraw request for the same display region is obtained.

9. Method of at least one of the claims 7 and 8, wherein only redraw requests are cached which request the redrawing of a display region using at least one of:
- monochrome information;
- grayscale gradient information;
- color gradient information; and
- algorithmical drawing rules.

10. Method of at least one of the claims 7 - 9, including subtracting at least one cached display region from the object region to obtain the object sub-region.

11. Method of at least one of the claims 1 - 10, including superimposing object image information onto the at least one pixel of the object sub-region to generate redrawn pixels of the object sub-region for display.

12. Method of at least one of the claims 1 - 11, including performing the superposition operation for remaining pixels intersected by the object boundary using the cached redraw requests.

13. Method of at least one of the claims 1 - 12, wherein the superimposing operation includes
drawing the object; and
calculating at least one pixel parameter reflecting object image information and background image information of a pixel.

14. Method of at least one of the claims 1 - 13, including generating an object sub-region request for obtaining from the graphics server background image information of the object sub-region;
transmitting the object sub-region request to the graphics server;
receiving the background image information of the at least one pixel of the object sub-region; and
transmitting at least the modified pixels of the object sub-region to the graphics server for storage.

15. Method of at least one of the claims 1 - 14, including transmitting the object sub-region including the redrawn pixels to a display device.

16. Method for outputting an object to a client graphic unit of a client unit, the client graphic unit having a plurality of pixels including background image information, including:
receiving an object sub-region request from the client unit, requesting background image information of an object sub-region, the object sub-region including at least one pixel intersected by the object boundary;
retrieving the background image information of the at least one pixel of the object sub-region; and
transmitting the background image information to the client unit, enabling the client unit to superimpose the object image information onto the background image information of the at least one pixel of the object sub-region, in order to generate a redrawn object sub-region for output.

17. Method of claim 16, including
receiving at least the modified pixels of the object sub-region at the graphics server for storage; and
deleting from a storage pixels corresponding to the modified pixels received from the client unit.

18. Method of at least one of the claims 16 and 17, wherein the object sub-region is constituted by an area shared by an object region including pixels of the object and a clipping region for the object based on client graphic unit characteristics.

19. Method of at least one of the claims 16 - 18, wherein the object sub-region is the smallest rectangle including pixels intersected by the object boundary.

20. Method of at least one of the claims 16 - 19, wherein the object sub-region includes at least one field only including pixels intersected by the object boundary.

21. Method of at least one of the claims 16 - 20, wherein the object consists of a plurality of sub objects.

22. Method of at least one of the claims 16 - 21, wherein the object is constituted by at least one of the group consisting of:
- a letter;
- a number;
- a character; and
- a geometrical shape.

23. Method of at least one of the claims 16 - 22, wherein the object sub-region is obtained by subtracting at least one display region from the object region, a display region including background image information known at the client unit.

24. A program having instructions adapted to carry out the method of one of the preceding claims.

25. A computer readable medium, in which a program is embodied, where the program is to make a computer execute the method of one of the claims 1 - 23.

26. A computer program product comprising the computer readable medium according to claim 18.

27. Client unit for outputting an object to a client graphic unit, the client graphic unit including a plurality of pixels with background image information, including:
a determining module for determining an object sub-region including at least one pixel intersected by an object boundary;
a client communication module for obtaining from a graphics server background image information of the at least one pixel of the object sub-region; and
a drawing module for superimposing object image information of the object to be drawn onto the background image information of the at least one pixel of the object sub-region, in order to generate a redrawn object sub-region for output.

28. Client unit of claim 27, wherein the determining module is adapted to determine an object region including pixels at least partially covered by the object; to determine a clipping region for the object based on client graphic unit characteristics; and to determine the object sub-region as an area shared by the clipping region and the object region.

29. Client unit of at least one of the claims 27 and 28, wherein the clipping region is based on one of the group consisting of:
- client graphic unit characteristics; and
- user interaction.

30. Client unit of at least one of the claims 27 - 29, wherein the object sub-region is the smallest rectangle including pixels intersected by the object boundary.

31. Client unit of at least one of the claims 27 - 30, wherein the object sub-region includes at least one field only including pixels intersected by the object boundary.

32. Client unit of at least one of the claims 27 - 31, wherein the object consists of a plurality of sub objects.

33. Client unit of at least one of the claims 27 - 32, wherein the object is constituted by at least one of the group consisting of:
- a letter;
- a number;
- a character; and
- a geometrical shape.

34. Client unit of at least one of the claims 27 - 33, including a caching module for caching redraw requests for redrawing background image information of a display region at the client and for discarding a cached redraw request, if a more recent redraw request for the same display region is obtained.

35. Client unit of claim 34, wherein the caching module is adapted to only cache redraw requests for redrawing of a display region using at least one of:
- monochrome information;
- grayscale gradient information;
- color gradient information; and
- algorithmical drawing rules.

36. Client unit of at least one of the claims 33 - 35, wherein the determining module is adapted to subtract at least one cached display region from the object region to obtain the object sub-region.

37. Client unit of at least one of the claims 27 - 36, wherein the drawing module is adapted to superimpose object image information onto the at least one pixel of the object sub-region to generate redrawn pixels of the object sub-region for display.

38. Client unit of at least one of the claims 27 - 37, wherein the drawing module is adapted to perform the superposition operation for remaining pixels intersected by the object boundary using the cached redraw requests.

39. Client unit of at least one of the claims 27 - 38, wherein the superimposing operation includes
drawing the object; and
calculating at least one pixel parameter reflecting object image information and background image information of a pixel.

40. Client unit of at least one of the claims 27 - 39, wherein the client communication module is adapted to generate an object sub-region request for obtaining from the graphics server background image information of the object sub-region; to transmit the object sub-region request to the graphics server; to receive the background image information of the at least one pixel of the object sub-region; and to transmit at least the modified pixels of the object sub-region to the graphics server for storage.

41. Client unit of at least one of the claims 27 - 40, wherein the client communication module is adapted to transmit the object sub-region including the redrawn pixels to a display device.

42. Graphics server for outputting an object to a client graphic unit of a client unit, the client graphic unit having a plurality of pixels including background image information, including:
a server communication module for receiving an object sub-region request from the client unit, requesting background image information of an object sub-region, the object sub-region including at least one pixel intersected by the object boundary;
a retrieval module for retrieving the background image information of the at least one pixel of the object sub-region; and
wherein the server communication module is adapted to transmit the background image information to the client unit, enabling the client unit to superimpose the object image information onto the background image information of the at least one pixel of the object sub-region to generate redrawn pixels of the object sub-region for display.

43. Graphics server of claim 42, wherein
the server communication module is adapted to receive at least the modified pixels of the object sub-region to the graphics server for storage; and
the retrieval module is adapted to delete from a storage pixels corresponding to the modified pixels received from the client unit.

44. Graphics server of at least one of the claims 42 and 43, wherein the object sub-region is constituted by an area shared by an object region including pixels of the object and a clipping region for the object based on client graphic unit characteristics.

45. Graphics server of at least one of the claims 42 - 44, wherein the object sub-region is the smallest rectangle including pixels intersected by the object boundary.

46. Graphics server of at least one of the claims 42 - 45, wherein the object sub-region includes at least one field only including pixels intersected by the object boundary.

47. Graphics server of at least one of the claims 42 - 46, wherein the object sub-region is obtained by subtracting at least one display region from the object region, a display region including background image information known at the client unit.
